Europäisches Patentamt

European Patent Office

Office européen des brevets

(11) Publication number: **0 277 801**
**A2**

# EUROPEAN PATENT APPLICATION

(21) Application number: **88300854.2**

(22) Date of filing: **02.02.88**

(51) Int. Cl.⁴: **F 26 B 21/00**
**F 26 B 23/00**

(30) Priority: **03.02.87 GB 8702385**

(43) Date of publication of application:
**10.08.88 Bulletin 88/32**

(84) Designated Contracting States:
**BE DE FR GB NL SE**

(71) Applicant: **KC PRODUCTS LIMITED**
**North Tay Works 46 Loons Road**
**Dundee Scotland DD3 6AP (GB)**

(72) Inventor: **Carver, Derek Campbell**
**1 John Kennedy Drive**
**Thurso Caithness KW14 7DZ (GB)**

(74) Representative: **Hustwitt, Philip Edward et al**
**Hustwitt & Co. St. George's House 44 Hatton Garden**
**London, EC1N 8ER (GB)**

(54) **Crop conditioner.**

(57) A multi-purpose crop conditioner comprises a housing (1) having an air entrance (2) at one end of the housing (1) and an air exit duct (4) at the other end of the housing (1). An evaporator (6) of a refrigerating system is located within the housing (1) at the air entrance (2) and the condenser (7) of the refrigerating system is located within the housing (1) near the air exit duct (4). Air suction means (15) is positioned in the air exit duct (4) to draw air through the housing (1) so that when the refrigerating system is operated the crop conditoner is operable as a dehumidifying drier by drawing air through the evaporator (6) into the housing (1) past the condenser (7) and out through the air exit duct (4).

The housing (1) further includes a pivotable wall section (9) which is closable to divide the interior of the housing (1) into first and second chambers (10, 11), the evaporator (6) being in the first chamber (10) and the condenser (7) being in the second chamber (11). Further air suction means (14) is positioned above the first chamber (10) and further air entrance means (3) is provided in a wall of the second chamber (11) on the upstream side of the condenser 7. The crop conditioner is operable as a chiller when the pivotable wall section (9) is closed to separate the first chamber (10) from the second chamber (11) and the further air suction means (14) is operated. The crop conditioner is also operable simultaneously as a chiller and a hot air drier for two different crops when the pivotable wall section (9) is closed and both air suction means (15) and the further air suction means (14) are operated, the refrigerating system being also operated.

Fig.2.

## Description

## CROP CONDITIONER

This invention relates to crop conditioners for treating agricultural crops in an air treatment process.

Crops freshly harvested and stored in the United Kingdom contain a substantial quantity of moisture and heat which will cause the crop to deteriorate relatively quickly unless some action is taken to prevent this deterioration.

In one known method of conditioning a crop for storage and preservation on the farm, a crop, which may be a grain crop or a root crop, is chilled by passing air at a temperature of, for example, 4°C, through the crop in order to chill it to a temperature at which the harmful effects promoted by moisture in the crop do not occur. When once chilled by cold air in this way, the crop will remain at a low temperature near the chilled temperature for a substantial period of time without deterioration of the crop.

An alternative method of conditioning a crop to prevent its deterioration is a treatment with hot air in order to evaporate off substantial quantities of moisture. In one application of this method the hot air is introduced at the bottom of a grain stack and the lower part of the grain stack becomes dried. However, a difficulty arises in that the hot air becomes cooler during its passage up the stack, during which it also acquires moisture from the crop, with the result that there is a liability, for the cooled air to lose condensed moisture into the grain at the top of the stack.

In order to avoid this difficulty it is already known to dry a grain stack with air having a reduced relative humidity and a temperature only marginally above the temperature of the crop. When such air is passed through the grain stack the air takes up the moisture from the lower parts of the grain stack but the air does not become sufficiently cooled for there to be condensation from the air on to the grain at the top of the stack. In consequence a dry band of grain is formed at the bottom of the stack and this dry band gradually extends upwards throughout the stack during treatment by this dehumidifying drying method.

The apparatus used to effect this treatment is a dehumidifying drier in which air is first passed over an evaporator of a refrigerating system and then the condenser of that system. As the air contacts the evaporator its temperature is lowered so that the relative humidity reaches the dew point and moisture is condensed from the air. The cooled dehumidified air is then heated by passage over the condenser to a temperature slightly above the temperature of the crop to be dried.

It is an object of the present invention to provide a crop conditioner which is a multi-purpose machine for aiding the process of crop preservation on the farm.

It is a further object of the present invention to provide a crop conditioner capable of giving an improved dehumidifying drying operation as compared with known crop conditioners operating on this principle.

According to the present invention there is provided a crop conditioner comprising a housing, having an air entrance at one end of the housing and an air exit at the other end of the housing, a refrigerating system including an evaporator located at the air entrance of the housing and a condenser located near the air exit of the housing, and air suction means so positioned as to move air into the housing through the air entrance and out of the housing through the air exit, characterised in that the housing further includes a movable wall section which is closable to form first and second chambers within the housing, the evaporator being in the first chamber and the condenser being in the second chamber, further air suction means positioned to move air out of the first chamber without passing through the second chamber when the movable wall section is closed, and further air entrance means permitting air to enter the second chamber on the upstream side of the condenser.

Preferably the further air entrance means includes adjustable control louvres. Advantageously the position of the control louvres is adjusted automatically in dependence on the temperature of the ambient atmosphere.

When the crop conditioner of the present invention is used with the movable wall section open, the refrigerating system operated, and the air suction means operated but the further air suction means out of action, the crop conditioner acts as a dehumidifyer drier. In such operation it is preferred that the control louvres in the further air entrance means are open so that dehumidified air is mixed with ambient air to give a desired relative humidity, for example 65% RH, for maximum running efficiency.

Operation of the further air suction means when the movable wall section is closed to isolate the first chamber from the second chamber enables operation of the crop conditioner of the present invention as a chiller. The refrigerating system and the first air suction means may or may not be operated when the crop conditioner is working in the chilling mode depending on the temperature of the ambient air. If the temperature of the ambient air is not low enough, the refrigerating system is operated, and the first air suction means is also operated in order to provide cooling of the condenser by air drawn into the second chamber through the further air entrance means.

In these circumstances air is being drawn through the second chamber past the condenser where the air is heated. The second chamber is thus acting as a hot air generator and the hot air may be used directly for drying a different crop from that which is being chilled so that the crop conditioner of the present invention is operating as a combined chiller and drier.

The present invention will be further understood from the following detailed description of a prefered embodiment thereof which is made by way of example with reference to the acompanying diagrammatic drawings, in which:-

Figure 1 is a side view of a crop conditioner according to the present invention,

Figure 2 is a plan view of the crop conditioner of Figure 1 operating in the chilling or in the chilling/drying mode, and

Figure 3 is a plan view of the crop conditioner of Figure 1 operating in the dehumidifying drying mode.

Referring to the accompanying drawings the crop conditioner of the present invention comprises a housing 1, having an air inlet 2 at one end of the housing, a further air inlet 3 in a side wall of the housing 1, and an air exit duct 4 extending through and from the other end wall 5 of the housing 1.

The housing 1 contains a conventional refrigerating system of which an evaporator 6 acting as a cold heat exchanger is located immediately adjacent the air inlet 2 and a condenser 7 acting as a hot heat exhanger is located within the housing 1 near but spaced from the end wall 5. Both the evaporator 6 and the condenser 7 are conventional tube fin heat exchangers, the evaporator 6 preferably constituting the air inlet 2.

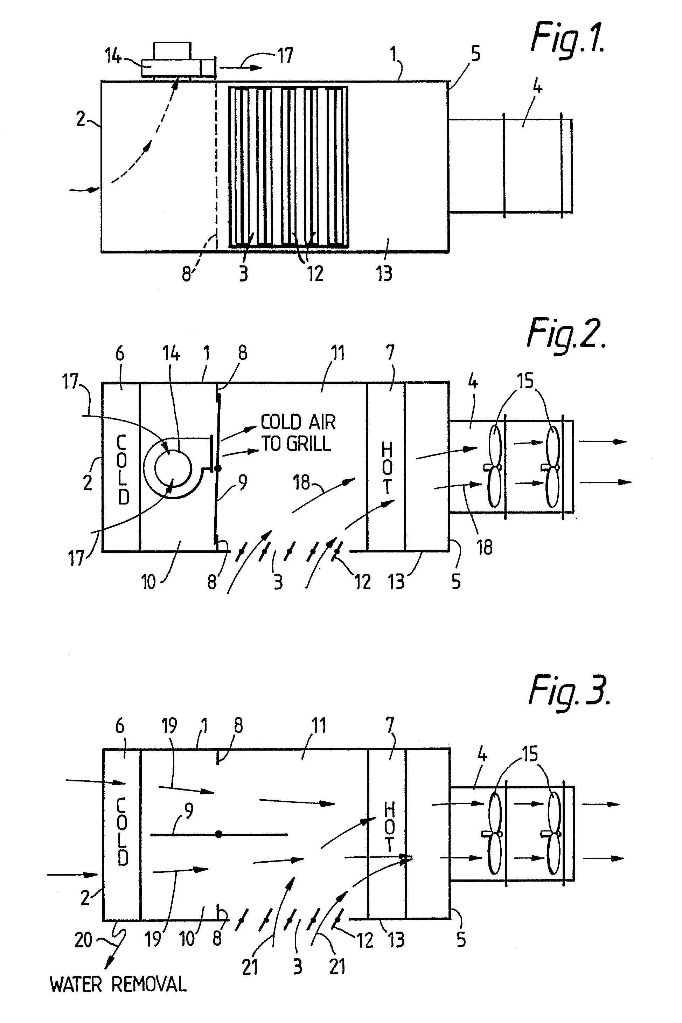

The interior of the housing 1 is divisible into two separate chambers by wall portions 8 (Figures 2 and 3) and a pivotable flap 9 in its closed position as shown in Figure 2. In its closed position the pivotable flap 9 engages the wall portions 8 to define a first chamber 10 adjacent to the evaporator 6 and a second chamber 11 which includes the condenser 7. A portion of one side wall 13 of the second chamber 11 contains the further air inlet 3 which includes control louvres 12. The louvres 12 are indicated in Figures 2 and 3 as being disposed vertically but may equally be horizontally disposed.

The interior of the first chamber 10 communicates through a ceiling or top wall of the housing 1 with a two speed centrifugal fan 14. Alternatively there may be two fans with different operating speeds selectively operable to provide the same facility as a two speed fan. A series of fans 15 is arranged in the air exit duct 4 leading from the second chamber 11.

When the crop conditioner is to be used as a chiller, the flap 9 which constitutes the movable section of the internal wall within housing 1 is closed and the fan 14 is operated to draw air past the evaporator 6 into the first chamber 10 and thereafter upwards and out through the fan 14 as indicated by the arrows 17 in Figure 2. A temperature sensor not shown is provided for testing the temperature of the air delivered at an outlet from the fan 14.

In accordance with the preferred method of operating the crop conditioner of the present invention as a chiller the fan 14 is operated at full speed with the refrigerating system inoperative and louvres 12 closed. The temperature of the air at fan 14 is sampled after five minutes by the temperature sensor under the control of a microprocessor conveniently mounted on a side wall of the housing 1. If the temperature of the air delivered from the fan 14 is not at or below the desired temperature, say 4°C, the refrigerating system is automatically brought into operation, and the refrigerating system is automatically brought into operation, and the louvres 12 are opened and the fans 15 energised to provide for air cooling of the condenser 7. Fan 14 continues to operate at full speed for a further five minute period after which the air temperature at the fan 14 is tested again. If this temperature is now at the desired level the fan 14 is cut back to half speed and the chiller continues to run. However if the temperature has still not reduced to the desired level, the fan 14 is automatically switched off and re-energised again after one hour when the above procedure is repeated.

When operating as a chiller the crop conditioner therefore has three modes of operation, namely full fan only, full fan with refrigeration and half fan with refrigeration, and automatically chooses the correct mode for any ambient conditions so as to ensure that the crop conditioner is never allowed to run for any significant period of time unless the temperature of air supplied from the crop conditioner in its chilling mode to the grain is at or below the control setting. If the temperature of air entering the grain rises above the control setting this is detected and the chiller automatically switches itself off and re-energises after a delay of one hour.

As already indicated the crop conditioner may be used simultaneously as a chiller and a hot air drier for two different crops by using the heated air drawn through the second chamber 11 from the further air inlet 3 and over the surface of the condenser 7 as indicated by the arrows 18 in Figure 2.

When the crop conditioner is to be used as a dehumidifyer drier the flap 9 constituting the movable section of the internal wall within the housing 1 is opened as shown in Figure 3. In this condition the fans 15 in the air exit duct 4 are energised so that ambient air is drawn through the housing 1 of the crop conditioner as shown by the arrows 19. The position of the control louvres 12 at the further air inlet 3 is determined automatically by a temperature sensor in accordance with the temperature of the outside ambient air. When the crop conditioner is switched on in the dehumidifying drier mode the control louvres 12 are fully open if the ambient temperature is greater than 8°C, and the control louvres 12 are fully closed when the ambient temperature falls below 8°C. If the ambient temperature falls below 5°C the crop conditioner is not allowed to operate in the dehumidifying drying mode.

However, at the normal time for using the crop conditioner in the dehumidifying dring mode to dry grain, that is to say in the Autumn in the United Kingdom, the ambient temperature is usually of the order of 16°C. Accordingly the crop conditioner comes into operation upon switching on with the control louvres 12 open.

The refrigerating system is always energised when the crop conditioner is operated in the dehumidifyer drier mode. Accordingly, air drawn into the housing 1 at the air inlet 2 passes over the cold surface of the evaporator 6. During the passage of the ambient air over the evaporator 6 the temperature of the air is reduced from about 16°C to a temperature in the range of 8-10°C. In consequence the relative humidity which was originally about 95% is increased to 100% and moisture is condensed from the ambient air and removed as indicated at the arrow 20 in Figure 3. The dried air is then conveyed through the first chamber 10 and into the second chamber 11 where the air is mixed with ambient air drawn into the second chamber 11 through the open control louvres 12 at the further air inlet 3 as shown by the arrows 21. This mixing of the cold dried air with ambient undried air commences in the second chamber 11 before the combined air stream is drawn through the hot heat exchanger which is the condenser 7 of the refrigerating system and which is at a temperature of the order of 35°C. The mixed air stream at a temperature of about 18°C and having a relative humidity of the order of 60%, is drawn through the air exit duct 4 and fed to the bottom of a grain stack.

An important feature of the operation of the crop conditioner of the present invention in the dehumidifying drying mode is the mixing of the cold dried air with ambient air before the cold dried air is warmed in its passage over the surface of the condenser 7. The size of the further air inlet 3 is selected so as to give an input of ambient air to provide approximately 65% of the mixed air discharged from the crop conditioner through the air exit duct 4. The purpose of introducing the ambient air is to achieve an appropriate level of humidity in the air fed to the crop because it has been found that at temperatures about about 8°C over-drying of the crop ocurs if the chilled air from the dehumidifying drier is fed undiluted to the grain. In the range from about 5°C to about 8°C however the appropriate relative humidity is achieved without any mixing of the chilled dried air with ambient air and the control louvres 12 are closed.

If the ambient temperature falls below about 5°C the crop conditioner is automatically switched off so as to prevent icing occurring on the evaporator 6.

Used in the dehumidifying drying mode as described above the crop conditioner of the present invention enables a grain stack to be dried to a desired moisture content throughout, that is to say without formation of any wet layer near the top of the stack. This is because the air fed to the bottom of the stack is at a temperature close to the temperature of the crop and there is comparatively little cooling of the air passing through the crop stack.

In an alternative construction the movable wall section may comprise two flaps, each pivoted at one end to a side wall of the housing 1 so that the flaps, pivoted on opposite side walls, may be brought together with their free ends just overlapping to divide the interior of the housing 1 into two chambers. Also these two flaps may be pivoted at diagonally opposite corners of the part of the housing 1 between the evaporator 6 and the condenser 7. In this arrangement, when the two flaps comprising the movable wall section are in the closed position, the interior of the housing 1 is divided into two substantially triangular chambers.

Although the crop conditioner illustrated in Figures 1 to 3 has been described as used for conditioning grain crops, crop conditioners in accordance with the present invention may be used to condition root crops. However, the volumes of air required for conditioning root crops are less than the volumes required for conditioning grain crops so that in general a different and smaller crop conditioner is used for root crops than for grain crops.

The modified version of the crop conditioner having the two flaps to divide the interior of the housing into two substantially triangular chambers is advantageously used in conditioning root crops. In this crop conditioner the fan (corresponding to the fan 14 of Figures 1 and 2), which is used when the crop conditioner is operated in the chiller mode with the flaps closed is preferably mounted in the middle of the wall on the side wall of the part of the housing 1 which is in the first chamber. The air inlet opening corresponding to air inlet opening 3 of Figures 1 to 3 is a plain opening without control louvres in the side wall of the housing 1 which constitutes part of the second chamber.

A root crop conditioner used for conditioning seed potates may be used first as a dehumidifying drier in order to dry out potates which have been brought soaking wet from the field, and then subsequently used in the chiller mode to chill seed potatoes to 4°C. For other root crops such as beetroot and carrots, a root crop conditioner according to the present invention may be required to operate in the chiller mode to chill the crop to a lower temperature. Under these operating conditions in a relatively cool ambient atmosphere the evaporator 6 will be subject to icing up. In order to overcome this the root crop conditioner is conveniently fitted with a temperature sensor suitably located on or near the surface. The temperature sensor, for example a termocouple, is set to reverse the refrigerating cycle when it senses a temperature of approximately -6°C at the evaporator 6 so that the refrigerating cycle is reversed for a short period sufficient to remove the surface ice from the evaporator. During this period the evaporator 6 becomes a condenser in the refrigerating cycle and, when the evaporator 6 is de-iced, the temperature sensor again reverses the cycle and normal operation of the crop conditioner is resumed.

Crop conditioners in accordance with the present invention may also be used to preserve various fruit crops by operating the crop conditioner in a chiller mode to chill the fruit to the appropriate temperature.

## Claims

1. A crop conditioner comprising a housing (1), having an air entrance (2) at one end of the housing (1) and an air exit (4) at the other end of the housing (1), a refrigerating system including an evaporator (6) located at the air entrance (2) of the housing (1) and a condenser (7) located near the air exit (4) of the housing (1), and air suction means (15) so positioned as to move air into the housing (1) through the air entrance (2) and out of the housing (1) through the air exit (4), <u>characterised in that</u> the housing (1) further includes a movable wall section (9) which is closable to form first and second chambers (10, 11) within the housing (1), the evaporator (6) being in the first chamber (10) and the condenser (7) being in the second chamber (11), further air suction means (14) positioned to move air out of the first chamber (10) without passing through the second chamber (11) when the movable wall section (9) is closed, and further air entrance means (3) permitting air to enter the second chamber (11) on the upstream side of the condenser (7).

2. A crop conditioner according to Claim 1, <u>characterised in that</u> control louvres (12) are provided in the further air entrance means (3).

3. A crop conditioner according to Claim 2, <u>characterised in that</u> the control louvres (12) are adjustable in dependence on the temperature of the ambient atmosphere.

4. A crop conditioner according to any one of the preceding claims <u>characterised by</u> operating as a chiller when the movable wall section (9) is closed to separate the first chamber (10) from the second chamber (11) and the further air suction means (14) is operated.

5. A crop conditioner according to any one of Claims 1 to 3 <u>characterised by</u> being operable to constitute both a chiller and an air drier when the movable wall section (9) is closed, the refrigerating system is operated, and both the further air suction means (14) and the air suction means (15) are operated.

6. A crop conditioner according to any one of Claims 1 to 3 <u>characterised by</u> being operable as a dehumidifying drier when the movable wall section (9) is open, the refrigerating system is operated and the air suction means (15) is operated to draw air through the evaporator (6) into the first chamber (10) and thence through the second chamber (11) and the condenser (7) to the air exit (4) from the second chamber (11).

7. A crop conditioner according to Claim 6, <u>characterised in that</u> the air drawn from the first chamber (10) into the second chamber (11) is mixed with ambient air drawn into the second chamber (11) through the further air entrance means (3).

8. A crop conditioner according to any one of the preceding claims <u>characterised in that</u> the movable wall section consists of two flaps each hinged to a side wall of the housing (1).

9. A crop conditioner according to Claim 8, <u>characterised in that</u> the two flaps are mounted near diagonally opposite corners of the housing (1) and are closable to divide the housing (1) into substantially triangular first and second chambers.

10. A crop conditioner according to any one of the preceding claims <u>characterised in that</u> a temperature sensor is mounted on the evaporator 6, the temperature sensor being operable at a predetermined temperature to reverse the refrigerating system to de-ice the evaporator 6.

0277801

*Fig.1.*

*Fig.2.*

COLD AIR TO GRILL

COLD

HOT

*Fig.3.*

COLD

HOT

WATER REMOVAL